# EUROPÄISCHE PATENTSCHRIFT

(11) **EP 1 639 922 B1**
(45) Veröffentlichungstag und Bekanntmachung des Hinweises auf die Patenterteilung: **12.12.2007**
(21) Anmeldenummer: 05020605.1
(22) Anmeldetag: 21.09.2005
(51) Int. Cl.: A47J 31/06

(54) **Brühvorrichtung mit Heisswasserauslauf**
Brewing device with hot water outlet
Dispositif d'infusion avec sortie d'eau chaude

(30) Priorität: 22.09.2004 DE 202004014738 U
(43) Veröffentlichungstag der Anmeldung: 29.03.2006
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 1 050 258
- WO-A-02/088580

## Beschreibung

Die vorliegende Erfindung betrifft eine Vorrichtung zur Zubereitung von Kaffee, insbesondere für eine Niederdruckkaffeemaschine, mit einer Brühkammer und einer Zuführeinheit für Brühwasser, die einen Zulauf für Brühwasser, eine Ventileinheit und einen Auslass für Brühwasser aufweist.

Eine solche Brühvorrichtung ist bereits in der GB 939 183 gezeigt, die eine Kaffeemaschine zur Zubereitung von Kaffee, Tee oder anderen Heißgetränken beschreibt. Bei dieser Brühvorrichtung wird die Brühkammer durch einen unbewegbar mit der Vorrichtung verbunden Halter zur Aufnahme eines Filterbeutels und ein diesen Halter verschließendes Abdeckteil gebildet. Das Abdeckteil ist über einen Hebelarm an einem Drehpunkt mit der Vorrichtung verbunden, wobei das Abdeckteil zum Schließen der Brühkammer um diesen Drehpunkt geschwenkt wird. Für den Zulauf des Brühwassers in die Brühkammer weist das Abdeckteil ein Einlassventil auf, das mit einer Zulaufleitung verbunden ist. Das Brühwasser strömt vom Einlassventil direkt in die Brühkammer und trifft mittig auf den Filterbeutel. Leider ist sowohl die Abdichtfunktion dieses kegelförmigen Einlassventils, im Hinblick auf die durch die hohen Betriebstemperaturen verstärkte Kalkablagerungen, als auch auf die gesamte Lebensdauer des Ventils, im Hinblick auf die übliche Betriebszeit derartiger Kaffeemaschinen, häufig nicht ausreichend.

Zwar verbessert der aus der WO 02/088 580 A1 bekannte Einsatz von Ventilen mit flexiblem Ventilschirm die Ventilfunktion bei derartigen Kaffeemaschinen, jedoch erfordern Schirmventile eine sorgfältige Herstellung und Montage, bei weiterhin nur begrenzten Lebensdauern.

Die bisher bekannten Brühvorrichtungen weisen daher den Nachteil einer häufig eingeschränkten Ventilfunktion bei teilweise aufwendiger Ventilkonstruktion und Brühwasserführung auf.

Der vorliegenden Erfindung liegt daher die Aufgabe zugrunde, eine kostengünstige Brühvorrichtung zur Zubereitung von Kaffee der eingangs genannten Art bereitzustellen, die eine verbesserte Brühwasserführung bei gleichzeitig sicherer Ventilfunktion ermöglicht.

Diese Aufgabe wird erfindungsgemäß dadurch gelöst, dass die Ventileinheit mindestens eine Membran und eine Kanalplatte umfasst, wobei die Kanalplatte mindestens eine Ventilöffnung an der der Membran zugewandten Seite der Kanalplatte, mindestens einen mit der mindestens einen Ventilöffnung in Verbindung stehenden Kanalabschnitt zum radialen Führen des Brühwassers in der Kanalplatte und mindestens eine mit dem mindestens einen Kanalabschnitt in Verbindung stehenden Durchgangsbohrung, die an der gegenüberliegenden Seite der Kanalplatte mündet, aufweist.

Die Kanalplatte ermöglicht durch die Kanalabschnitte und die Durchgangsbohrungen eine einfache und effektive Verteilung des Brühwassers zu den Funktionselementen, d. h. den Ventilöffnungen der Zuführeinheit. Dadurch kann das Brühwasser frei von konstruktiven Einschränkungen zu jeder Position in der Kanalplatte, bzw. in der Ventileinheit, geführt werden. Durch diese Ausführung der Kanalplatte können in Zusammenwirkung mit der Membran unterschiedlichste Ventilfunktionen verwirklicht werden, die durch die Ausgestaltung der Membran als Funktionsteil der Ventileinheit eine sichere Ventilfunktion ermöglichen.

Bevorzugt kann die mindestens eine Membran als einteilige, flexible Platte, bevorzugt aus einem gummielastischen Material ausgebildet sein, die sich im Wesentlichen über eine Stirnfläche der Kanalplatte erstreckt. Eine einteilige, flexible Membranplatte ist, insbesondere wenn sie aus einem gummielastischen Material hergestellt ist, eine sehr einfache Lösung für eine geeignete Membran, die trotzdem die Vorteile einer hohen Funktionssicherheit sowie einer einfachen Herstellung hat. Die Anordnung der Membranplatte auf der Stirnfläche der Kanalplatte ermöglicht die freie Positionierung von Ventilen. Neben Gummiwerkstoffen sind auch silikonbasierte Materialien und TPE-Werkstoffe für die Herstellung derartiger Membranen geeignet.

Die mindestens eine Membran weist mindestens ein Loch auf, das einen Übertritt des Brühwassers von der einen Membranseite auf die andere Membranseite ermöglicht. Das Loch in der Membran ermöglicht den direkten Einsatz der Kanalplatte in der Zuführeinheit für Brühwasser ohne einen seitlichen Zufluss zur Kanalplatte zu erfordern. So wird eine möglichst kurze und direkte Verbindung des Zulaufs für Brühwasser mit dem Auslass für Brühwasser in die Brühkammer ermöglicht.

Eine Modifikation sieht vor, dass die Zuführeinheit einen Heißwasserauslauf aufweist und die Ventileinheit ein Heißwasser-Auslaufventil umfasst. Die Einbindung eines solchen Heißwasserauslaufes in die Zuführeinheit erweitert dessen Funktionsspektrum. Dabei vermeidet die Einbindung des notwendigen Heißwasser-Auslaufventils in die Ventileinheit der Zuführeinheit für Brühwasser eine sonst notwendige eigenständige Ventileinheit für den Heißwasserauslauf, bzw. eine zweite Pumpe und/oder einer weiteren Heizeinrichtung. Auch wird durch die Führung des Heißwassers über die Zuführeinheit die Zuführeinheit erwärmt und so die Abkühlung des in die Brühkammer eintretenden Brühwassers in der Zuführeinheit vermindert. Die Merkmalskombination des Anspruchs 4 könnte auch unabhängig von einem der Ansprüche 1 bis 3 Schutz genießen und selbstständig weiterverfolgt werden.

Eine bevorzugte Ausgestaltung sieht vor, dass der Heißwasserauslauf eine Drosselblende aufweist. Die im Heißwasserauslauf angeordnete Drosselblende ermöglicht einen Druckaufbau in den Kanalabschnitten und den Durchgangsbohrungen der Kanalplatte und über den Druckaufbau eine sichere Betätigung druckabhängiger Ventilmechanismen, insbesondere eines druckabhängigen Überlaufventils. Mittels des Druckaufbaus der Drosselblende kann insbesondere ein Bypass durch das Überlaufventil vermieden werden und so das gesamte zur Verfügung stehende Brühwasser durch den Heißwasserauslauf gefördert werden. Des Weiteren ermöglicht die Drosselblende die Anpassung des Druckverlaufs bei einer Heißwasserabgabe an den Druckverlauf des Brühvorgangs.

Für eine einfache und funktionssichere Ausbildung des Heißwasser-Auslaufventils kann das Auslaufventil von der Kanalplatte und der mindestens einen Membran ausgebildet sein, wobei eine Auslaufbohrung in der Kanalplatte durch die Membran verschließbar ausgestaltet ist. Auf diese Weise kann ein Auslaufventil für Heißwasser ohne die Verwendung zusätzlicher Bauteile realisiert werden.

Um eine direkte Steuerung des Auslasses für Brühwasser in die Brühkammer zu ermöglichen, kann die Ventileinheit ein Auslassventil umfassen. In einer einfachen Ausführung kann das Auslassventil von der Kanalplatte und der mindestens einen Membran ausgebildet sein, wobei eine Auslassbohrung in der Kanalplatte durch die Membran verschließbar ausgestaltet ist. Auf diese Weise wird ein einfaches und funktionssicheres Auslassventil ohne zusätzliche Bauteile realisiert

Eine zweckmäßige Ausführungsform sieht vor, dass ein Stellmechanismus vorgesehen ist, wobei der Stellmechanismus ausgebildet ist, die Ventileinheit zwischen dem Auslass für Brühwasser und dem Heißwasserauslauf umzuschalten. Ein solcher Stellmechanismus ermöglicht die sichere Funktion der Zuführeinheit mit einem Auslass für Brühwasser und einem Heißwasserauslauf, wobei die Zuführeinheit zwei Brühfunktionen vereinigt, den Zulauf von Brühwasser in eine Brühkammer und den Zulauf von Brühwasser in einen separaten Auslauf für Brühwasser, beispielsweise zum Aufbrühen von Tee oder Instantgetränken. Die Merkmalskombination des Anspruchs 9 könnte auch unabhängig von einem der Ansprüche 1 bis 8 Schutz genießen und selbstständig weiterverfolgt werden.

Vorteilhafter Weise kann der Stellmechanismus zwei Ventilkörper, bevorzugt zwei Ventilkugeln, umfassen und die Ventilkörper können geeignet sein, mittels der Membran die Auslassbohrung und die Heißwasser-Auslaufbohrung zu verschließen. Diese Ausführung ermöglicht ein einfaches Verschließen der dem Auslass für Brühwasser und dem Heißwasserauslauf zugeordneten Bohrungen in der Kanalplatte durch die sich auf diese Bohrungen legende Membran, wobei das Aufdrücken der Membran in wiederum einfachster Weise mit den Ventilkörpern realisiert wird.

Eine Variante sieht vor, dass der Stellmechanismus weiter eine drehbare Schaltwelle mit Nockenkonturierung umfasst, die unterschiedliche, axial versetzte Schaltflächen aufweist, wobei die Schaltflächen durch die den zwei Ventilkörpern zugeordnete Stell- und Entlastungspositionen definiert sind und wobei die Schaltwelle in den zugeordneten Stell- und Entlastungspositionen mittels der axial versetzten Schaltflächen die Ventilkörper auf die Membran drückt oder entlastet und die Membran die Auslass- und Heißwasser-Auslaufbohrungen verschließt oder freigibt. Dieser Stellmechanismus ist in einfachster Weise schaltfähig und über die drehbare Schaltwelle mit weiteren eine Drehbewegung umfassenden Funktionen der Kaffeemaschine koppelbar. Mittels der axial versetzten Schaltflächen auf der drehbaren Schaltwelle kann ein Ventilkörper durch die vorstehende Schaltfläche auf die Membran gedrückt werden und eine der Bohrungen verschließen, während sich der andere Ventilkörper im Wirkungsbereich der zurückversetzten Schaltfläche befindet, ohne die zweite Bohrung zu verschließen. Dabei sind die Ventilkörper bevorzugt in dem Funktionsteil der Zuführeinheit geführt, beispielsweise in einer geeigneten Bohrung, so dass sich ihre Position gegenüber den Bohrungen des Auslasses für Brühwasser und des Heißwasserauslaufs nicht verändert. Beim Drehen der Schaltwelle relativ zur Kanalplatte verändert sich die Zuordnung der Schaltflächen zu den Ventilkörpern, wodurch die bisher geschlossene Bohrung geöffnet und die bisher geöffnete Bohrung verschlossen wird.

Eine weitere Ausbildung sieht vor, dass die Zuführeinheit einen Überlauf für Brühwasser aufweist und die Ventileinheit ein Überlaufventil umfasst. Ein durch die Ventileinheit absperrbarer Überlauf für Brühwasser ermöglicht einen Ablauf von Luft, Kondensat und abgekühltem Brühwasser aus den Versorgungsleitungen zum Zulauf für Brühwasser und aus der Zuführeinheit für Brühwasser selbst sowie einen Erwärmungsüberlauf, d. h. den bei einer Erwärmung von Wasser aus einer Boilervorrichtung durch die Volumenzunahme herausgedrückten Wasseranteil. Dadurch wird sichergestellt, dass auch zu Beginn der Nutzung der Brühvorrichtung kein abgekühltes Wasser über die Ventileinheit und den Auslass für Brühwasser in die Brühkammer gelangt. Sowohl beim ersten Brühvorgang nach dem Anschalten der Kaffeemaschine, als auch zu Beginn jedes weiteren Brühvorgangs wird so die Brühkammer ausschließlich mit heißem Brühwasser beaufschlagt. Auch ermöglicht der Überlauf für Brühwasser ein Erwärmen bzw. ein Warmhalten der Zuführeinheit sowie der Anschlussleitungen zur Zuführeinheit, indem ständig ein geringer Volumenstrom des erwärmten Brühwassers durch die Leitungen und die Zuführeinheit geführt wird und die Zuführeinheit durch den Überlauf wieder verlässt. Dabei kann das durch die Ventileinheit bereitgestellte Überlaufventil eine direkte Regelung des Überlaufs in der Zuführeinheit realisieren.

Günstigerweise kann das Überlaufventil weiter ein Funktionsteil der Zuführeinheit umfassen und das Überlaufventil von der Kanalplatte, der mindestens einen Membran und dem Funktionsteil ausgebildet sein, wobei die Membran ein Loch aufweist, das durch die Kanalplatte oder das Funktionsteil verschließbar ist. Dabei können die Kanalplatte und das Funktionsteil mit einer Vertiefung, bevorzugt einer konkaven Vertiefung, ausgestalten sein. Die gegenüber angeordneten Vertiefungen ermöglichen eine Bewegung der Membran zwischen diesen Vertiefungen und damit auch eine ausreichende Angriffsfläche für unter Druck gesetztes Brühwasser. Das Loch in der Membran ermöglicht im drucklosen Zustand einen Ablauf des Brühwassers aus der Kanalplatte durch die Membran in den Überlauf. Beim Druckanstieg im Brühwasser wird die Membran, da das verhältnismäßig kleine Loch keinen ausreichenden Ablauf von Brühwasser bei erhöhtem Druck ermöglicht, in die Vertiefung gedrückt und das Loch durch die angepasste Ausgestaltung eine Vertiefung verschlossen. Diese Ausführung ermöglicht eine äußerst einfache und funktionssichere Ausgestaltung eines Überlaufs für Brühwasser. Auch ermöglicht diese Form des Überlaufventils eine schnelle Reaktion auf Druckveränderungen, sowie durch die einstellbaren Parameter von Lochdurchmesser und Vertiefungsquerschnitt eine sehr gute Abstimmung auf alle weiteren Betriebsparameter der Kaffeemaschine. Dabei könnte die Merkmalskombination des Anspruchs 13 auch unabhängig von einem der Ansprüche 1 bis 12 Schutz genießen und selbstständig weiterverfolgt werden.

Um eine preiswerte Herstellung der Kanalplatte zu realisieren, kann die Kanalplatte aus Kunststoff ausgebildet sein, bevorzugt als Spritzgießteil. Durch die Herstellung der Kanalplatten aus Kunststoff kann in einfacher Weise eine für die Ventilfunktion ausreichend genau ausgebildete Kanalplatte hergestellt werden, die einen sicheren Betriebe ermöglicht und insbesondere als Spritzgießteil preiswert herstellbar ist.

Für eine einfache und sichere Anordnung der Kanalplatte in der Zuführeinheit für Brühwasser kann die Kanalplatte Bohrungen und/oder Ausnehmungen zum Positionieren der Kanalplatte in der Zuführeinheit aufweisen. Die Bohrungen und/oder Ausnehmungen ermöglichen dabei das Positionieren der Kanalplatte ohne den Einsatz zusätzlicher Bauteile, wodurch sowohl die gesamten Bauteilekosten als auch der Montageaufwand für die Zuführeinheit minimiert werden.

Von Vorteil ist es weiter, wenn die Kanalplatte an mindestens einer Stirnseite vorstehende Bolzenabschnitte zum Fixieren, die mindestens einen Membran aufweist. Die vorstehenden Bolzenabschnitte verhindern ein Verrutschen der Membran gegenüber der Kanalplatte und können so auch nach einer großen Anzahl von Betriebsstunden einen sicheren Betrieb der Zufuhreinheit, insbesondere der zugeordneten Ventilfunktionen, ermöglichen.

Vorteilhafterweise kann ein Betätigungsring zum Öffnen der Brühkammer und bevorzugt eine Handhabe zum Betätigen des Betätigungsrings vorgesehen sein, wobei der Betätigungsring und/oder die Handhabe ausgebildet sind, den Stellmechanismus zu betätigen. Die Kopplung des Verschließmechanismus der Brühkammer mit dem Stellmechanismus zum Umschalten zwischen dem Auslass für Brühwasser und dem Heißwasserauslauf ermöglicht einen sicheren mit der eingestellten Funktion der Kaffeemaschine gekoppelten Wechsel zwischen Auslass und Heißwasserauslauf. Dadurch wird ein gleichzeitiger Austritt des Brühwassers aus dem Auslass für Brühwasser und dem Heißwasserauslauf vermieden und ein Ablauf des für den Brühvorgang in der Brühkammer vorgesehen Brühwassers durch den Heißwasserauslauf sicher verhindert. Dabei kann die Nockenkonturierung der Schaltwelle so ausgebildet sein, dass die Auslassbohrung erst gleichzeitig mit der Abdichtung der Brühkammer durch einen entsprechenden Dichtring geöffnet wird.

Eine bevorzugte Ausbildung sieht vor, dass die Ventileinheit eine zweite Membran umfasst. Eine solche zweite Membran ermöglicht die Abdichtung der Kanalplatte zu beiden Stirnseiten hin sowie eine Aufteilung der Ventile auf beide Stirnseiten der Kanalplatte, wodurch sich eine einfachere Anordnung und sichere Funktion der Ventile in der Ventileinheit ergibt.

Für eine einfache Ausführung der zweiten Membran kann die zweite Membran als einteilige, flexible Platte, bevorzugt aus einem gummielastischen Material ausgebildet sein, die sich im Wesentlichen über eine zweite Stirnfläche der Kanalplatte erstreckt. Hierdurch wird auch für die zweite Membran eine kostengünstige funktionssichere Lösung ermöglicht, die auch auf der zweiten Stirnfläche der Kanalplatte die freie Positionierung der Ventileinheiten ermöglicht. Vorteilhafterweise kann auch die zweite Membran Löcher aufweisen, die einen Übertritt des Brühwassers von der einen Membranseite auf die andere Membranseite ermöglichen, wobei die Löcher die direkte Durchleitung des Brühwassers aus der Kanalplatte durch die Membran zurück in die Zuführeinheit möglich machen.

Eine günstige Ausgestaltung sieht vor, dass die Ventileinheit ein Druckventil umfasst, wobei das Druckventil den Zulauf von unter Druck stehendem Brühwasser zu dem Auslassventil und/oder dem Heißwasser-Auslaufventil ermöglicht. Das Druckventil verhindert den Zulauf von drucklosem Brühwasser, beispielsweise Luft, Kondensat, abgekühltes Brühwasser und Erwärmungsüberlauf, zum Brühwasserauslass und/oder Heißwasserauslauf. Erst durch eine Druckbeaufschlagung auf das Brühwasser, z. B. mittels einer Pumpe, öffnet sich das Druckventil und gibt den Zulauf zum Auslassventil und/oder dem Heißwasser-Auslaufventil frei. In einer einfachen funktionssicheren Ausbildung kann das Druckventil von der Kanalplatte und der zweiten Membran ausgebildet sein, wobei eine Durchlaufbohrung in der Kanalplatte durch die Membran verschließbar ausgestaltet ist.

Des Weiteren bezieht sich die hier vorliegende Erfindung auf eine Brühvorrichtung zur Zubereitung von Kaffee, insbesondere für eine Niederdruckkaffeemaschine, mit einer Brühkammer, die einen oberen Brühkammerteil und einen unteren Brühkammerteil aufweist, mindestens ein in einer Vertiefung des unteren Brühkammerteils angeordneten und mit gemahlenen Kaffee gefüllten Filterkissen (Kaffeepad) wobei der obere Brühkammerteil und der untere Brühkammerteil relativ zueinander bewegbar ausgeführt und von einer Öffnungsstellung, in der das Kaffeepad einsetz- oder entnehmbar ist, in einer Brühstellung überführbar sind und mit einer im oberen Brühkammerteil angeordneten Zuführeinheit für Brühwasser, die einen Zulauf für Brühwasser, eine Ventileinheit und einen Auslass für Brühwasser aufweist, wobei die Ventileinheit mindestens eine Membran und eine Kanalplatte umfasst, wobei die Kanalplatte mindestens eine Ventilöffnung an der der Membran zugewandten Seite der Kanalplatte, mindestens einen mit dem mindestens einen Ventilöffnung in Verbindung stehenden Kanalabschnitt zum radialen Führen des Brühwassers in der Kanalplatte und mindestens eine mit der mindestens einen Kanalabschnitt in Verbindung stehenden Durchgangsbohrung, die an der gegenüberliegenden Seite der Kanalplatte mündet, aufweist. Die Kanalplatte ermöglicht eine einfache Führung des Brühwassers in der Zuführeinheit und die freie Positionierung von Funktionseinheiten. Im Zusammenwirken mit der Membran ermöglicht die Kanalplatte einfache Lösungen für benötigte Ventilfunktionen.

Im Folgenden wird anhand der Zeichnungen eine Ausführungsform der erfindungsgemä-ßen Brühvorrichtung näher erläutert. Es zeigt:
- Fig. 1: eine seitliche Schnittansicht der Brühvorrichtung in einer Brühstellung,
- Fig. 2: eine vergrößerte Schnittansicht der Zuführeinheit aus Fig. 1,
- Fig. 3: eine perspektivische Ansicht der Unterseite der Kanalplatte aus Fig. 1 und 2,
- Fig. 4: eine vergrößerte Schnittdarstellung der Zuführeinheit in einer anderen Schnittebene, und

- Fig. 5: eine vergrößerte Schnittdarstellung der Zuführeinheit in noch einer anderen Schnittebene.

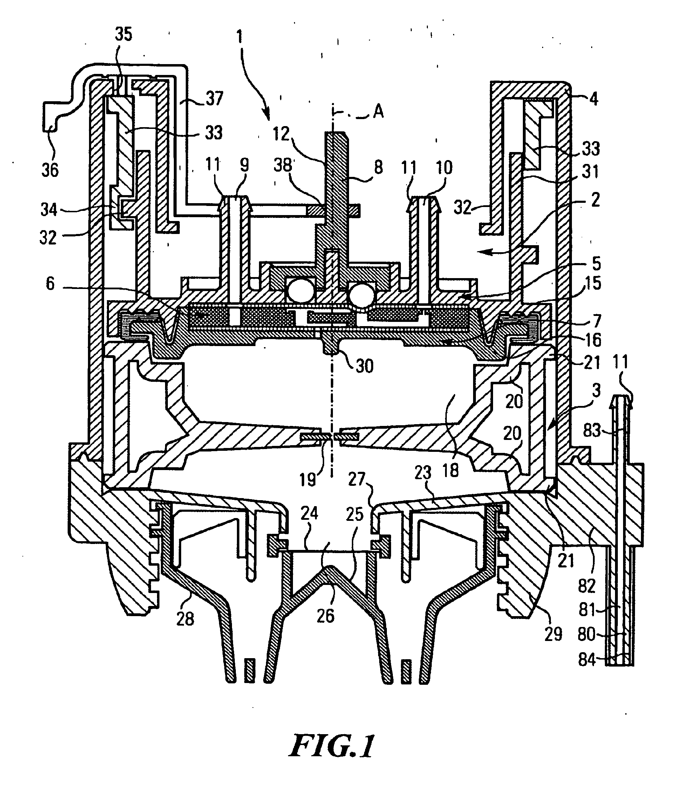

Die in Fig. 1 dargestellte Brühvorrichtung ist Bestandteil einer Niederdruckkaffeemaschine, die in hier nicht beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb hier auf diesen verwiesen wird.

Fig. 1 zeigt den Schnitt durch eine erfindungsgemäße Brühvorrichtung 1 mit einem oberen Brühkammerteil 2 und einer Wechselkassette 3, die in einem Gehäuse 4 angeordnet sind. Der obere Brühkammerteil 2 besteht aus einem oberen Funktionsteil 5, einer innenliegenden Ventileinheit 6 und einer Druckplatte 7. Dabei ist das obere Funktionsteil 5 derart ausgeformt, dass es die in der Druckplatte 7 aufgenommene Ventileinheit 6 abdeckt und die Schaltwelle 8 aufnimmt. In dem Funktionsteil 5 sind weiter ein Zulaufanschluss für Brühwasser 9 und ein Auslaufanschluss für Heißwasser 10 ausgebildet. Am Zulaufanschluss 9 und am Auslaufanschluss 10 ist an den offenliegenden Enden jeweils ein umlaufender Kragen 11 vorhanden, der den Anschluss und die Befestigung der Brühwasserleitungen erleichtert. Außerhalb der Ventileinheit 6 liegt das Funktionsteil 5 an der Druckplatte 7 an und umfasst mit seiner Außenkante seitliche die Lippendichtung 15, die im Außenbereich zwischen dem oberen Funktionsteil 5 und der Druckplatte 7 fixiert ist und in axialer Richtung nach unten teilweise über die Druckplatte 7 übersteht. Die Druckplatte 7 weist einen ringförmig umlaufenden, in axialer Richtung nach unten vorstehenden Steg 16 auf, der als einzigster Teil der Druckplatte 7 nach unten über die Lippendichtung 15 übersteht. In der Mitte der Druckplatte 7 ist ein Zapfen 30 angeordnet, an dem ein sich seitlich erstreckendes nach unten gerichtetes Federelement zum Positionieren und Abhalten des Kaffeepads befestigbar ist.

Die Druckplatte 7 des oberen Brühkammerteils 2 bildet zusammen mit der Wechselkassette 8 eine Brühkammer 18. Zum Ausbilden der Brühkammer 18 weist dazu die Wechselkassette 3 eine Vertiefung auf, in deren Mitte sich der Brühkammerauslass 19 befindet. Im Seitenbereich weist die Vertiefung einen ersten Absatz 20 auf, der mit dem Steg 16 der Druckplatte 7 das Kaffeepad fixiert. An diesen Absatz 20 schließt sich in Form eines weiteren Absatzes ein Vorsprung 21 an, der mit der gegenüber dem Steg 16 zurückversetzten Lippendichtung 15 zusammenwirkt, um die Brühkammer 18 abzudichten. Der umlaufende Vorsprung 21 bildet dabei gleichzeitig die Oberkante der Wechselkassette 3. Die Wechselkassette 3 weist an einer Seite einen nicht dargestellten Griff auf, mit dem die Wechselkassette 3 in der Öffnungsstellung aus der Brühvorrichtung 1 herausgezogen werden kann. Dazu hat das Gehäuse 4 an der Seite des Griffes eine entsprechende Öffnung. Die Wechselkassette 3 kann auch in einem gewendeten Zustand, d. h. die Ober- und Unterseite der Wechselkassette 3 sind vertauscht, in die Brühvorrichtung 1 eingesetzt werden. Dabei weist die in Fig. 1 als Unterseite der Wechselkassette 3 dargestellte Seite eine kleinere Vertiefung als die Oberseite auf, wodurch sich mit dieser Unterseite eine Brühkammer 18 mit einem verringerten Volumen bilden lässt. Um die Wechselfähigkeit zu ermöglichen sind auch auf der Unterseite der Wechselkassette 3 im seitlichen Bereich der Vertiefung der Absatz 20 und der Vorsprung 21 ausgebildet.

Die Wechselkassette 3 stützt sich auf ihrer Unterseite mit dem äußeren Absatz 21 auf der Abstützplatte 23 ab, die seitlich eine Verlängerung des Gehäuses 4 bildet und mit diesem verbunden ist. Die Abstützplatte 23 weist mittig einen Ablauf 26 mit einem nach unten gezogenen Spritzschutz 27 auf. Unterhalb des Spritzschutzes befindet sich ein Sieb 24 mit einem darunter angeordneten Ablaufkegel 25, die gemeinsam für einen cremigen Kaffee sorgen. Der Auslauf 28 ist in einer Vertiefung der Abstützplatte 23 eingeschraubt, die durch den sich in axialer Richtung erstreckenden Ringabschnitt 29 der Abschnittsplatte 23 gebildet wird. Der Ringabschnitt 29 ist zum Aufnehmen des Auslaufes 28 mit einem Innengewinde versehen. Der Auslauf 28 leitet den Kaffee zwei Auslauftüllen zu.

Seitlich des Auslaufes 28 ist ein Heißwasser-Auslaufrohr 80 mit einem Heißwasserkanal 81 angeordnet. Das Heißwasser-Auslaufrohr 80 geht in einen Vorsprung 82 über, bzw. ist mit diesem Vorsprung 82 verbunden, der sich seitlich von der Abstützplatte 23 erstreckt und gegenüber dem Gehäuse 4 vorsteht. Der Heißwasserkanal 81 geht durch den Vorsprung 82 hindurch und mündet oberhalb des Vorsprungs 82 seitlich des Gehäuses 4 in einem Heißwasser-Anschlussrohr 83, das am Ende mit einem Kragen 11 versehen ist, um den sicheren Anschluss einer nicht gezeigten Heißwasserleitung zu erleichtern. Das Heißwasser-Auslaufrohr 80 ist mit einer dekorierten Hülse 84 versehen, die auf das Heißwasser-Auslaufrohr 80 aufgeschoben ist.

Um das obere Brühkammerteil 2 in axialer Richtung zu bewegen, ist das obere Funktionsteil 5 mit einem sich in axialer Richtung erstreckenden ringförmig ausgebildeten Aufdrückteil 31 verbunden. Am Außenumfang des Aufdrückteils 31 ist ein Führungssteg 32 ausgebildet, der sich wendelförmig um den Außenumfang des Aufdrückteils 31 erstreckt. Bevorzugt ist der Führungssteg 32 in mindestens drei sich wiederholenden Abschnitten unterteilt, wodurch sich die gleiche Anzahl an Angriffspunkten für die Übertragung der axialen Bewegung ergibt. Um den Außenumfang des Aufdrückteils 31 ist weiter das Betätigungsteil 33 platziert, das sich oberhalb des Führungsstegs 32 bis zur Oberkante des Gehäuses erstreckt. Das ebenfalls ringförmig ausgebildete Betätigungsteil 33 ist rampenförmig gestaltet und drehbar um das Aufdrückteil 31 angeordnet. Durch einen Öffnungsschlitz 35 an der Stirnseite des Gehäuses 4 ist das Betätigungsteil mit einem Handgriff 36 verbunden. Das Betätigungsteil 33 weist weiter einen Haken 34 auf, der den Führungssteg 32 umgreift. Der Führungssteg 32 umfasst weiter einen waagrechten Stegteil, der in der Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil auf, der am unteren Ende des wendelförmigen Führungsstegs 32 angeordnet ist und als Anschlag der Hubeinrichtung für die Öffnungsstellung der Brühvorrichtung 1 dient. Der Handgriff 36 ist zusätzlich mittels des Übertragungsbügels 37 mit der Schaltwelle 8 verbunden, wobei eine kreisabschnittsförmige Öffnung 38 am Ende des Übertragungsbügels 37 auf dem einseitig abgeflachten Ende 12 der Schaltwelle 8 sitzt, und dadurch die Betätigung der Schaltwelle 8 direkt mit der Drehung des Betätigungsteils 33 durch den Handgriff 36 koppelt.

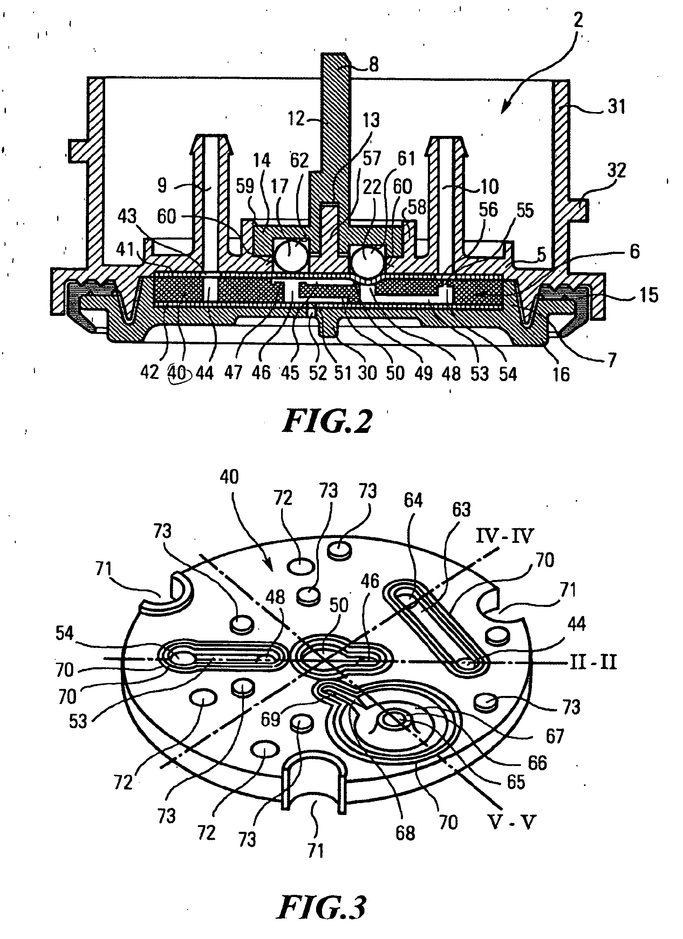

Anhand der vergrößerten Darstellung des oberen Brühkammerteils 2 in Fig. 2 ist insbesondere die Ausgestaltung der Ventileinheit 6 zu erkennen. Die Ventileinheit 6 besteht aus der Kanalplatte 40 und einer oberen Membran 41, die zwischen der Kanalplatte 40 und im oberen Funktionsteil 5 angeordnet ist, sowie einer unteren Membran 42, die sich zwischen der Kanalplatte 40 und der Druckplatte 7 befindet. Im Bereich des Zulaufanschlusses 9 weist die obere Membran 41 ein Zulaufloch 43 und die Kanalplatte 40 eine Zulaufbohrung 44 auf. Dabei sind der Zulaufkanal für Brühwasser des Zulaufanschlusses 9, das Zulaufloch 43 und die Zulaufbohrung 44 koaxial zueinander angeordnet, wobei das Zulaufloch 43 in der Membran 41 einen leicht größeren Querschnitt als die Zulaufbohrung 44 und der Zulaufkanal aufweist, um auch bei einer etwas versetzten Anordnung des Zulaufkanals, des Zulauflochs 43 und der Zulaufbohrung 44 eine Brühwasser-Zulaufführung ohne Einschnürung zu ermöglichen. Die Zulaufbohrung 44 der Kanalplatte 40 steht mit der Verteilervertiefung 45 in Verbindung, die mittig auf der Oberseite der Kanalplatte 40 angeordnet ist. Die Verteilervertiefung 45 weist in ihrem Randbereich die Auslassbohrung 46 mit dem in die Verteilervertiefung 45 vorspringenden Auslassring 47 und die Auslaufbohrung 48 mit dem in die Verteilervertiefung 45 vorspringenden Auslaufring 49 auf. Die Auslassbohrung 46 und die Auslaufbohrung 48 erstrecken sich von der Oberseite der Kanalplatte 40 zur Unterseite der Kanalplatte 40. Auf der Unterseite der Kanalplatte 40 ist mittig die Auslassvertiefung 50 angeordnet, die mit der Auslassbohrung 46 in Verbindung steht und mindestens ein, hier drei Auslasslöcher 51 in der unteren Membran 42 aufweist, die mit ebenfalls mindestens einer, hier drei Auslassöffnungen 52 in der Druckplatte 7 in Verbindung stehen, um das Einleiten des Brühwassers in die Brühkammer 18 zu ermöglichen. Die Auslaufbohrung 48 steht über den Auslaufkanal 53 mit der Drosselbohrung 54 in Verbindung, die auf der Oberseite der Kanalplatte 40 eine Drosselblende 55 aufweist, und über das Auslaufloch 56 in der oberen Membran 41 in den Auslaufkanal des Auslaufanschlusses 10 mündet. Der Auslaufkanal, die Auslaufbohrung 56, die Drosselblende 55 und Drosselbohrung 54 sind koaxial zueinander angeordnet, wobei das Auslaufloch 56 gegenüber der Drosselbohrung 54 und dem Auslaufkanal ein leicht vergrößerten Durchmesser aufweist.

Auch die Ausgestaltung der Schaltwelle 8 ist deutlich in Fig. 2 dargestellt. Die Schaltwelle 8 ist durch eine zentrierte Bohrung 13 am Schaltende 14 drehbar auf einem von dem oberen Funktionsteil 5 vorstehenden Wellenvorsprung 57 gelagert. Das dem abgeflachten Ende 12 gegenüberliegende Schaltende 14 weist einen deutlich größeren Querschnitt als der Rest der Schaltwelle 8 auf und ist durch einen vom oberen Funktionsteil 5 vorstehenden Ring 58 geführt und mittels am Ring 58 ausgebildeter Rastelemente 59 in seiner Position gesichert. Das Schaltende 14 der Schaltwelle 8 weist neben der zentralen Bohrung 13 zwei in das Schaltende 14 hinein axial zueinander versetzte Schaltflächen 61, 62 auf, die auf die Betätigung der Ventilkugeln 17, 22 abgestimmt sind, die in zwei Bohrungen 60 im oberen Funktionsteil 5 geführt und auf der oberen Membran 41 im Bereich der Verteilervertiefung 45 oberhalb der Auslassbohrung 46 und der Auslaufbohrung 48 angeordnet sind. Die Ventilkugeln 17, 22 bilden zusammen mit der oberen Gummimembran 41, der Verteilervertiefung 45, der Auslassbohrung 46 mit Auslassring 47 und der Auslaufbohrung 48 mit Auslaufring 49 das Verteilerventil. Durch das Verteilerventil kann innerhalb der Ventileinheit 6 zwischen dem Auslass von Brühwasser in die Brühkammer und dem Auslauf von Heißwasser umgeschaltet werden.

Fig. 3 zeigt eine perspektivische Darstellung der Unterseite der Kanalplatte 40. Entlang der Linie II - II sind die bereits oben beschriebenen und in Fig. 2 im Schnitt dargestellten Kanalabschnitte, Durchgangsbohrungen und Vertiefungen der Kanalplatte 40 zusehen. Die Zulaufbohrung 44 mündet auf der Unterseite der Kanalplatte 40 in den Überlaufkanal 63 der wiederum in der Überlaufbohrung 64 endet. In dem in Fig. 3 vorne dargestellten Bereich der Unterseite der Kanalplatte 40 ist eine Durchlaufbohrung 65 angeordnet, die von einem Drucksteg 66 umgrenzt ist, der wiederum von einer Durchlaufvertiefung 67 in der Kanalplatte 40 umgeben ist. Die Durchlaufvertiefung 67 mündet über den Verteilerkanal 68 in der Verteilerbohrung 69, die auf der Oberseite der Kanalplatte 40 in die Verteilervertiefung 45 mündet. Alle auf der Unterseite der Kanalplatte 40 offenen brühwasserführenden Elemente, der Überlaufkanal 63 mit der Überlaufbohrung 64 und der Zulaufbohrung 44, die Durchlaufvertiefung 67 mit dem Verteilerkanal 68 und der Verteilerbohrung 69, die Auslassvertiefung 50 mit der Auslassbohrung 46 sowie der Auslaufkanal 53 mit der Auslaufbohrung 48 und der Drosselbohrung 54, sind auf der Oberfläche der Kanalplatte 40 mit zwei nebeneinander angeordneten Rippen 70 versehen, die mit einer entsprechenden Gegenrippe auf der Druckplatte 7 zusammenwirken, um in Verbindung mit der unteren Membran 42 eine möglichst große Dichtwirkung zueinander und gegenüber der Umgebung zu bewirken. Die auf der Oberseite der Kanalplatte 40 angeordneten Kanalabschnitte und Durchgangsbohrungen sind in entsprechender Weise mit zwei umlaufenden Rippen versehen, die mit einer entsprechenden Gegenrippe auf der Unterseite des oberen Funktionsteils 5 zusammenwirken.

Die Kanalplatte 40 weist weiter drei auf dem Umfang der Kanalplatte versetzt angeordneten Ausnehmungen 71 sowie mehrere Positionierungsbohrungen 73 in der Kanalplatte 40 selbst auf, die die Kanalplatte 40 in Bezug auf die Druckplatte 7 positionieren. Durch die Positionierungsbohrungen 72 erstrecken sich von der Druckplatte 7 mehrere Bolzen bis in den oberen Funktionsteil 5 hinein, wodurch insgesamt eine feste Positionierung der Druckplatte 7, der unteren Membran 42, der Kanalplatte 40, der oberen Membran 41 und dem oberen Funktionsteil 5 zueinander gewährleistet wird. Auf der Unterseite der Kanalplatte 40 sind weiter mehrere Bolzenabschnitte 73 angeordnet, die in der Stärke der unteren Membran 42 von der Unterfläche der Kanalplatte 40 vorstehen und zusätzlich zu den Positionierungsbohrungen 72 und den Ausnehmungen 71 die Anordnung der unteren Membran 42 auf der Unterseite der Kanalplatte 40 unterstützen und auch ein örtliches Verrutschen, Verschieben, Stauchen oder Strecken der gummielastischen Membran 42 im Wesentlichen verhindern. Die Oberseite der Kanalplatte 40 ist ebenfalls mit entsprechenden Bolzenabschnitten 73 versehen, um die obere Membran 41 möglichst sicher zu fixieren.

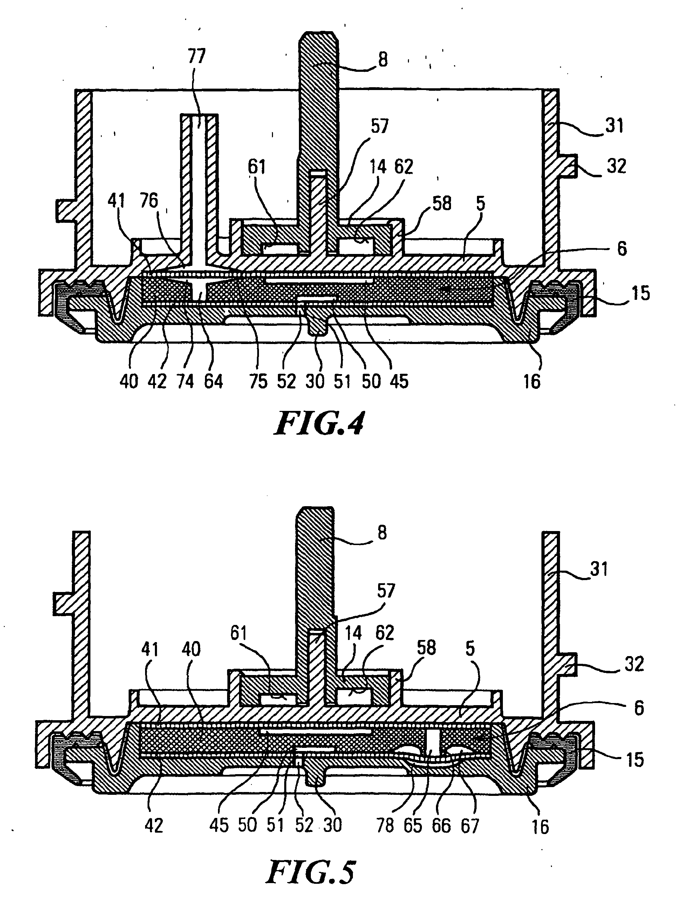

Fig. 4 zeigt einen weiteren Schnitt durch den oberen Brühkammerteil 2 entlang der in Fig. 3 dargestellten Linie IV - IV. Auch hier ist wiederum die zwischen der Druckplatte 7 und dem oberen Funktionsteil 5 angeordnete Ventileinheit 6 aus Kanalplatte 40 sowie der oberen und unteren Membran 41, 42 gezeigt. Auf der Oberseite der Kanalplatte 40 ist mittig wieder die Verteilervertiefung 45 zu sehen, während auf der Unterseite mittig die Auslassvertiefung 50 in Verbindung mit dem Auslaufloch 51 in der unteren Membran 42 und der seitlich des Zapfens 30 in die Brühkammer 18 mündenden Auslassöffnung 52. Weiter ist die sich von der Unterseite der Kanalplatte 40 zur Oberseite hin erstreckende Überlaufbohrung 64 zu sehen, die über den Überlaufkanal 63 mit der Zulaufbohrung 44 in Verbindung steht. Auf der Oberseite der Kanalplatte 40 verbreitet sich die Überlaufbohrung 64 zur Überlaufvertiefung 74. Die obere Membran 41 weist seitlich versetzt zur Überlaufbohrung 64 ein Überlaufloch 75 auf, das vom Durchmesser so dimensioniert ist, dass es einen drucklosen Ablauf von kaltem Brühwasser oder den Erwärmungsüberlauf aus dem Boiler gerade noch zulässt. Oberhalb der Membran 41 ist im oberen Funktionsteil 5 eine Überlaufauswölbung 76 eingearbeitet, die sich im Wesentlichen oberhalb der Überlaufvertiefung 74 in der Kanalplatte 40 erstreckt und dabei mit einer konkaven Wölbung und einem kreisförmigen Querschnitt ausgebildet ist. Die Überlaufauswölbung 76 erstreckt sich in den Überlaufkanal des Überlaufanschlusses 77 hinein. Der Überlaufkanal, die Überlaufauswölbung 76 und die Überlaufbohrung 64, sowie bevorzugt auch die Überlaufvertiefung 74, sind koaxial zueinander ausgerichtet, während das Überlaufloch 75 versetzt zur Überlaufbohrung 64 und dem Überlaufkanal des Überlaufanschlusses 77 angeordnet ist.

Fig. 5 zeigt noch einen Querschnitt durch den oberen Brühkammerteil, entlang der in Fig. 3 dargestellten Linie V - V. Auch hier ist wieder die zwischen oberen Funktionsteil 5 und der Druckplatte 7 angeordnete Ventileinheit 6 aus Kanalplatte 40 und oberer und unterer Membran 41, 42 dargestellt. Mittig auf der Oberseite der Kanalplatte 40 ist die Verteilervertiefung 45 angeordnet, während auf der Unterseite die Auslassvertiefung 50 mit dem Auslassloch 51 in der unteren Membran 42 und der Auslassöffnung 52 in der Druckplatte 7 dargestellt ist. Weiter ist die sich von der Oberseite der Kanalplatte 40 zur Unterseite erstreckende Durchlaufbohrung 65 mit dem gegenüber der Unterseite der Kanalplatte 40 vorstehenden Druckring 66 zusehen. Der vorstehende Druckring 66 bewirkt eine nach unten in die in der Druckplatte 7 ausgebildete Durchlaufwölbung 78 Durchbiegung der unteren Membran 42. Seitlich des Druckrings 66 und oberhalb der unteren Membran 42 befindet sich um den Druckring 66 herum die Durchlaufvertiefung 67, die sich über den Verteilerkanal 68 in die Verteilerbohrung 69 erstreckt.

In der Benutzung der erfindungsgemäßen Brühvorrichtung 1 kann in der Öffnungsstellung, in der das obere Brühkammerteil 2 durch das Betätigungsteil 33 und das Aufdrückteil 31 in eine obere Entstellung gefahren ist, die auf der Abstützplatte 23 aufliegende Wechselkassette 3 aus der Brühvorrichtung 1 entnommen werden, um die ausgewählte Vertiefung der Wechselkassette 3 mit einem bzw. gegebenenfalls zwei Filterkissen zu beladen. In der in Fig. 1 gezeigten Stellung wird die obere Stellung üblicherweise mit zwei Kaffeepads, bzw. einem Kaffeepad mit einer doppelten Menge an gemahlenen Kaffee, versehen. Die beladene Wechselkassette 3 wird wieder in die Brühvorrichtung 1 eingeschoben. Nach Beendigung des Beladevorgangs wird die Brühvorrichtung mit dem Handgriff 36 in die Brühstellung überführt. Dabei wird der Handgriff 36 um die vertikale Achse A geschwenkt und das mit ihm verbundene Betätigungsteil 33 und die Schaltwelle 8 um diese vertikale Achse A gedreht. Das Betätigungsteil 33 drückt mit seinem rampenförmig ausgebildeten Abschnitt auf den wendelförmigen Führungssteg 32, wobei sich der Kontakt zwischen dem Betätigungsteil 33 und dem Führungssteg 32 mit zunehmender Bewegung in Richtung der Brühstellung verringert. Durch den Druck auf den Führungssteg 32 wird das obere Brühkammerteil 2 in vertikaler Richtung auf die Wechselkassette 3 gedrückt. Bei dieser Schließbewegung berührt zunächst die Lippendichtung 15 den oberen Vorsprung 21. Als nächstes berührt der ringförmig umlaufende, von der Druckplatte 7 axial vorstehende, Steg 16 den oberen Absatz 20 der Wechselkassette 3, wobei sich die Lippendichtung 15 weiter an den Vorsprung 21 andrückt. Bei einer Zunahme des axialen Drucks über den Steg 16 auf die Wechselkassette 3 wird der untere Vorsprung auf die Abschussplatte 23 gedrückt. Durch den Eingriff des ringförmigen, axial vorstehenden Stegs 16 in den oberen Absatz 20 wird während des Schließvorgangs die Lage der Wechselkassette 3 vom oberen Brühkammerteil 2 ausgerichtet. Während des Schließens der Brühkammer 18 drückt die Druckplatte 7 mit einem am Zapfen 30 angeordneten Federelements das Kaffeepad gleichmäßig in die Vertiefung der Wechselkassette 3. Dadurch entsteht zwischen dem Kaffeepad und der Druckplatte 7 ein sich über einen großen Bereich der Druckplatte 7 radial erstreckender Hohlraum. In der Brühstellung ist die aus der Druckplatte 7 und der Vertiefung der Wechselkassette 3 gebildete Brühkammer 18 durch den auf den Absatz 20 drückenden Steg 16 und die auf den Vorsprung 21 drückende Lippendichtung 15 dicht gegenüber der Umgebung abgeschlossen.

Beim Schwenken des Handgriffs 36 um die vertikale Achse A wird über den Übertragungsbügel 37 auch die Schaltwelle 8 um die vertikale Achse A gedreht. Dabei ist die Stellung der Schaltwelle 8 durch dessen abgeflachtes Ende 12 und die kreisabschnittsförmigen Öffnung 38 am Ende des Übertragungsbügels 37 fest mit der Stellung des Handgriffs 36 und damit mit der Stellung des oberen Brühkammerteils 2 verbunden. In der nicht gezeigten Offenstellung der Brühkammer drückt die axial vorstehende Schaltfläche 61 die Ventilkugel 17 auf den Auslassring 47 der Auslassbohrung 46 und verschließt durch die obere Membran 41 die Auslassbohrung 46 und verhindert so den Eintritt von Brühwasser in die Brühkammer 18. In dieser Stellung steht die axial zurückversetzte Schaltfläche 62 über der zweiten Ventilkugel 22 ohne sie auf die obere Membran 41 zu drücken. Dadurch ist die Verbindung zwischen der Verteilervertiefung 45 und der Auslaufbohrung 48 geöffnet und es kann bei Bedarf Brühwasser aus dem Auslaufanschluss 10 entnommen werden. In der in Fig. 1 und Fig. 2 gezeigten Brühstellung der Brühvorrichtung 1 schließt die zweite Ventilkugel 22 durch den Druck der axial vorstehenden Schaltfläche 61 die Auslaufbohrung 48 durch den Druck der oberen Membran 41 auf den Auslaufring 49, während die Auslassbohrung 46 gegenüber der Verteilervertiefung 45 offen ist und bei einer Förderung des Brühwassers durch eine Pumpe dem Austritt des Brühwassers durch die Auslassöffnung 52 in die Brühkammer 18 hinein ermöglicht. Dabei sind die Schaltflächen 61 und 62 so zueinander angeordnet, dass die Auslassbohrung 46 erst in dem Moment geöffnet wird, in dem die Lippendichtung 15 während der Schließbewegung den oberen Vorsprung 21 berührt und eine Abdichtung der Brühkammer 18 gegenüber der Umgebung gewährleistet. So kann das Brühwasser auch bei bereits eingeschalteter Pumpe erst dann in die Brühkammer 18 einströmen, wenn die Brühkammer 18 abgedichtet ist. Dadurch wird verhindert, dass bei einer unzureichend geschlossenen Brühkammer 18 das Brühwasser aus dieser auslaufen kann, weil die Abdichtung der Lippendichtung 15 zum oberen Vorsprung 21 der Wechselkassette 3 noch nicht sicher wirkt.

Im Folgenden wird nunmehr die Wirkungs- und Funktionsweise der obenbeschriebenen Brühvorrichtung 1 näher erläutert.

Bei der Inbetriebnahme einer Kaffeemaschine befindet sich sowohl im Kanal des Zulaufanschlusses 9 für das Brühwasser als auch in der Kanalplatte 40 Luft, Kondensat und/oder abgekühltes Brühwasser. Die Ventileinheit 6 befindet sich dabei ebenso wie die umgebenden Teile des oberen Brühkammerteils 2 auf der Temperatur der Umgebung. Das Überlaufventil aus Überlaufvertiefung 74, der oberen Membran 41 mit dem Überlaufloch 75 und, der Überlaufauswölbung 76 im oberen Funktionsteil 5 gibt den Überlaufanschluss 77 frei. Dabei kann Wasser und Luft von der Überlaufbohrung 64 seitlich in die Überlaufvertiefung 74 und durch das Überlaufloch 75 in der Membran 41 in den Seitenbereich der Überlaufwölbung 76 und von dort in den Überlaufanschluss 77 strömen. Nach der Inbetriebnahme der Kaffeemaschine wird das Brühwasser in einer Boilervorrichtung erwärmt. Durch die mit steigender Temperatur zunehmende Ausdehnung des Brühwassers wird erwärmtes Brühwasser durch den Zulaufanschluss 9 in die Ventileinheit 6 gefördert. Das erwärmte Brühwasser ersetzt dabei die bisher in diesen Leitungen stehende Luft, Kondensat und/oder abgekühltes Brühwasser die drucklos durch das Überlaufventil und den Überlaufanschluss 77 aus dem oberen Brühkammerteil 2 herausgeführt werden. Bis zum Erreichen einer für einen Brühvorgang oder einer Heißwasserentnahme ausreichende Temperatur wird auch ein Teil des bereits erwärmten Brühwassers über das Überlaufventil und den Überlaufanschluss 77 aus dem oberen Brühkammerteil 2 herausgefördert. Dadurch wird die Ventileinheit 6 und die sie umgebenden Elemente des oberen Brühkammerteils 2 erwärmt. Dabei ist die Ausdehnung des Brühwassers in der Boilervorrichtung so gering und gleichmäßig, dass sich im Überlaufventil eine Strömungsgeschwindigkeit bzw. ein Druck ausbildet, der nicht ausreicht, die obere Membran 41 in die konkave Überlaufauswölbung 76 zu drücken und durch das Anliegen der Membran an der Wandung der Überlaufauswölbung 76 das Überlauflochs 75 in der Membran 41 zu verschließen. In diesem Betriebszustand bleibt daher der Überlaufanschluss 77 offen und in der Ventileinheit 6 kann sich kein Druck aufbauen. Beim Erwärmen des Brühwassers in der Boilervorrichtung wird ein kleiner Strom des erwärmten Brühwassers über die Ventileinheit 6 geleitet, der beim Abkühlen des Brühwassers aus einem Wasservorratsbehälter in die Boilervorrichtung nachgeführt wird, wodurch sich auch in einem Stand-By-Modus die Ventileinheit 6 nicht vollständig abkühlt und in der Ventileinheit 6 ständig erwärmtes Brühwasser für die Zubereitung von Kaffee bereitsteht. Das Überlaufventil ermöglicht den Ablauf von Kondensat und abgekühlten Brühwasser sowohl in der Brühstellung der Brühvorrichtung 1, als auch in der Stellung zum Zapfen von Heißwasser.

Sobald zum Starten des Brühvorgangs oder zur Entnahme von Heißwasser von einer Pumpe heißes Brühwasser über den Zulaufanschluss 9 in die Ventileinheit 6 gedrückt wird, schließt sich das Überlaufventil durch den in der Ventileinheit 6 angestiegenen Druck. Dabei wird die obere Membran 41 gegen die Wandung der Überlaufauswölbung 76 im oberen Funktionsteil 5 gedrückt, wodurch das Überlaufloch 75 in der Membran 41 abgedichtet wird. Dabei ist die in der Kanalplatte 40 ausgebildete Überlaufvertiefung 74 nicht nur für die Zuleitung des Wassers zum Überlaufloch 75 bei einem geöffneten Überlaufventil verantwortlich, sondern auch für die Ausbildung eines ausreichenden Drucks auf die Membran 41 und einer möglichst gleichmäßigen Verteilung dieses Drucks in einem mit Druck beaufschlagten Zustands, um ein sicheres Anliegen der Membran an der Wandung der Überlaufwölbung 76 und damit ein sicheres Verschließen des Überlaufventils zu gewährleisten.

Beim Druckanstieg in der Ventileinheit 6 öffnet das Durchlaufventil aus Durchlaufbohrung 65, vorstehendem Druckring 66, der unteren Membran 42, der Durchlaufauswölbung 78 und der Durchlaufvertiefung 67. Im drucklosen Zustand ist das Durchlaufventil geschlossen, da die Gummimembran 42 durch die Einspannung zwischen Druckplatte 7 und Kanalplatte 40 fest auf den gegenüber der Unterseite der Kanalplatte 40 vorstehenden Druckring 66 gedrückt wird. Bei dem durch die Pumpe bewirkten Druckanstieg in der Ventileinheit 6 wird die Membran 42 nach unten in die Durchlaufwölbung 78 gedrückt, wodurch sich zwischen Druckring 66 und der Gummimembran 42 ein Spalt öffnet, durch den das Brühwasser in die Durchlaufvertiefung 67 und von dort über den Verteilerkanal 68 und die Verteilerbohrung 69 in die Verteilervertiefung 45 strömen kann.

In der in Fig. 1 dargestellten Brühstellung sind ein oder zwei Filterpads in der Brühkammer 18 angeordnet. Ein umlaufender Verriegelungsrand des oberen Filterpads liegt dabei auf der Oberseite des oberen Absatzes 20 auf und befindet sich demnach in der Brühstellung zwischen dem Absatz 20 und dem Steg 16. In dieser geschossenen Brühstellung wird nach der Auslösung des Brühvorgangs von der Pumpe heißes Brühwasser über den Zulaufanschluss 9 der Ventileinheit 6 zugeführt. Da das Überlaufventil durch den Druckanstieg bereits geschlossen ist, strömt das Brühwasser über das geöffnete Durchlaufventil in die Verteilervertiefung 45 und von dort über den Brühwasserauslass in die Brühkammer. Durch die mit der Stellung der Brühkammer gekoppelte Stellung der Schaltwelle 8 ist bei geschlossener Brühstellung der Heißwasserauslauf durch die auf den Auslaufring 49 der Auslaufbohrung drückende Ventilkugel 22 geschlossen, während die Auslassbohrung 46 offen ist und eine Strömung des Brühwassers aus der Verteilervertiefung 45 über die Auslassbohrung 46 in die Auslassvertiefung 50 und von dort über mindestens einem, hier drei Auslasslöcher 51 in der unteren Membran 42 und mindestens einer, hier drei zugeordnete Auslassöffnungen 52 in die Brühkammer 80 hinein zulässt. Das in die Brühkammer 18 eintretende Brühwasser wird auf dem Kaffeepad flächig verteilt. Dabei wird das Kaffeepad zunächst durch das Wasser befeuchtet und im weiteren Verlauf von dem Brühwasser durchströmt, das am Brühkammerauslass 19 aus der Brühkammer 18 als Kaffee austritt und über den Ablauf 26 auf das Sieb 24 auftrifft. Dabei muss sichergestellt werden, dass der als dünner Sprühstrahl auf das Sieb 24 auftreffende Kaffee sofort über den Verteilerkegel 25 abgeführt wird. Durch diese Ausgestaltung bildet sich eine feine Crema aus. Nach einem bestimmten, einstellbaren Zeitraum, bzw. einer geförderten Wassermenge, wird die Pumpe wieder abgeschaltet und damit der Brühvorgang beendet. Bei dem Druckabfall öffnet sich zuerst das Überlaufventil, wodurch sich der Druck rasch abbaut und das Durchlaufventil schlagartig geschlossen wird.

Nach dem Ende des Brühvorgangs kann die Brühkammer 18 durch ein Rückschwenken des Handgriffs 36 wieder geöffnet werden. Beim Rückschwenken des Handgriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte axiale Bewegung in Richtung der öffnungsstellung über den Führungssteg 32 auf das Andrückteil 31 und damit auf das obere Brühkammerteil 2. Beim Öffnen der Brühkammer 18 kann ein am Zapfen 30 angeordnetes Federelement auf das feuchte Kaffeepad drücken und die nach dem Brühvorgang an der Druckplatte 7 anheftenden Bereiche des Kaffeepads lösen, so verbleibt das Kaffeepad beim Öffnen der Brühvorrichtung in der Vertiefung der Wechselkassette 3 und wird nicht zusammen mit dem oberen Teil der Brühkammer nach oben bewegt.

In der nicht dargestellten Öffnungsstellung ist die Druckplatte 7 soweit nach oben bewegt, dass sich der Steg 16 oberhalb der Öffnung für die Wechselkassette 3 im Gehäuse befindet. In dieser Öffnungsstellung kann die Wechselkassette 3 zusammen mit dem verbrauchten, durch das Brühwasser befeuchteten Kaffeepad aus der Brühvorrichtung herausgezogen werden. Nach der Entnahme des verbrauchten Kaffeepads aus der Brühkammervertiefurig der Wechselkassette 3 kann die Wechselkassette 3 für einen weiteren Brühvorgang erneut mit einem Kaffeepad versehen werden, oder ungefüllt in die Brühvorrichtung zurückgeschoben werden.

In der Öffnungsstellung ist durch die Stellung der Schaltwelle 8 die Auslassbohrung 46 durch die von der Ventilkugel 17 auf den Auslassring 47 gedrückte obere Membran 41 geschlossen, während die Auslaufbohrung 48 zur Verteilervertiefung 45 hin offen ist. Wird in dieser Offenstellung zur Abgabe von Heißwasser die Pumpe in Betrieb genommen wird nach der Auslösung der Heißwasser-Zapfung heißes Brühwasser über den Zulaufanschluss 9 in die Ventileinheit 6 gedrückt. Das unter Druck stehende Brühwasser schließt das Überlaufventil und öffnet das Durchlaufventil und gelangt durch die Stellung des Verteilerventils aus der Verteilervertiefung 45 in die Auslaufbohrung 48 und von dort in die Drosselbohrung 54. Am Ende der Drosselbohrung 45 ist unmittelbar vor dem Übergang in den Auslaufkanal des Auslaufanschlusses 10 eine Drosselblende 55 angeordnet, die durch ihren Strömungswiderstand bei der Entnahme von Heißwasser in der Ventileinheit 6 einen Druck aufbaut, der wie beim Brühvorgang ein sicheres Verschließen des Überlaufventils gewährleistet. Dabei ist der Durchmesser der Drosselblende 55 bevorzugt so abgestimmt, dass die Pumpe sowohl beim Brühvorgang als auch beim Zapfen von Heißwasser im gleichen Arbeitspunkt betrieben werden kann. Hierdurch kann mit der gleichen Einstellung der elektronischen Steuerung sowohl Kaffee als auch Heißwasser in einer vergleichbaren Menge bereitgestellt werden.

Der Auslaufanschluss 10 für Heißwasser am oberen Brühkammerteil 2 ist mittels eines Kunststoffschlauches mit dem Heißwasser-Auslaufrohr 80 verbunden, das seitlich an der Brühvorrichtung angeordnet und durch den Vorsprung 82 mit der Abstützplatte 23 verbunden ist.

## Patentansprüche

1. Brühvorrichtung zur Zubereitung von Kaffee, insbesondere für eine Niederdruckkaffeemaschine, mit einer Brühkammer (18) und einer Zuführeinheit für Brühwasser, die einen Zulauf (9) und einen Auslass für Brühwasser sowie eine Ventileinheit (6), mit mindestens einer Membran (41) und einer Kanalplatte (40) aufweist, wobei die Kanalplatte (40) mindestens eine Ventilöffnung an der der Membran (41) zugewandten Seite der Kanalplatte, mindestens einen mit der mindestens einen Ventilöffnung in Verbindung stehenden Kanalabschnitt zum radialen Führen des Brühwassers in der Kanalplatte (40) und mindestens eine mit dem mindestens einen Kanalabschnitt in Verbindung stehende Durchgangsbohrung, die an der gegenüberliegenden Seite der Kanalplatte (40) mündet, aufweist,
**dadurch gekennzeichnet, dass** die mindestens eine Membran (41)'mindestens ein Loch aufweist, das einen Übertritt des Brühwassers von der einen Membranseite auf die andere Membranseite ermöglicht.

2. Brühvorrichtung nach Anspruch 1,
**dadurch gekennzeichnet, dass** die mindestens eine Membran (41) als einteilige, flexible Platte, bevorzugt aus einem gummielastischen Material, ausgebildet ist, die sich im Wesentlichen über eine Stirnfläche der Kanalplatte (40) erstreckt.

3. Brühvorrichtung nach Anspruch 1 oder 2,
**dadurch gekennzeichnet, dass** die Zuführeinheit einen Heißwasserauslauf (10) aufweist und die Ventileinheit (6) ein Heißwasser-Auslaufventil umfasst.

4. Brühvorrichtung nach Anspruch 3,
**dadurch gekennzeichnet, dass** der Heißwasserauslauf (10) eine Drosselblende (55) aufweist.

5. Brühvorrichtung nach Anspruch 3 oder 4,
**dadurch gekennzeichnet, dass** das Auslaufventil von der Kanalplatte (40) und der mindestens einen Membran (41) ausgebildet ist, wobei eine Auslaufbohrung (48) in der Kanalplatte (40) durch die Membran (41) verschließbar ausgestaltet ist.

6. Brühvorrichtung nach einem der Ansprüche 1 bis 5,
**dadurch gekennzeichnet, dass** die Ventileinheit (6) ein Auslassventil umfasst.

7. Brühvorrichtung nach Anspruch 6,
**dadurch gekennzeichnet, dass** das Auslassventil von der Kanalplatte (40) und der mindestens einen Membran (41) ausgebildet ist, wobei eine Auslassbohrung (46) in der Kanalplatte (40) durch die Membran (41) verschließbar ausgestaltet ist.

8. Brühvorrichtung nach einem der Ansprüche 3 bis 7, '
**dadurch gekennzeichnet, dass** ein Stellmechanismus vorgesehen ist, wobei der Stellmechanismus ausgebildet ist, die Ventileinheit (6) zwischen dem Auslass für Brühwasser und dem Heißwasserauslauf (10) umzuschalten.

9. Brühvorrichtung nach Anspruch 8,
**dadurch gekennzeichnet, dass** der Stellmechanismus zwei Ventilkörper, bevorzugt zwei Ventilkugeln (17, 22), umfasst und die Ventilkörper geeignet sind, mittels der Membran (41) die Auslassbohrung (46) und die Heißwasser-Auslaufbohrung (48) zu verschließen.

10. Brühvorrichtung nach Anspruch 9,
**dadurch gekennzeichnet, dass** der Stellmechanismus weiter eine drehbare Schaltwelle (8) mit Nockenkonturierung umfasst, die unterschiedliche, axial versetzte Schaltflächen (61, 62) aufweist, wobei die Schaltflächen (61, 62) durch die den zwei Ventilkörpern zugeordnete Stell- und Entlassungspositionen definiert sind und wobei die Schaltwelle (8) in den zugeordneten Stell- und Entlassungspositionen mittels der axial versetzten Schaltflächen (61, 62) die Ventilkörper auf die Membran (41) drückt oder entlastet und die Membran (41) die Auslass- und Heißwasser Auslaufbohrungen (46, 48) verschließt oder freigibt.

11. Brühvorrichtung nach einem der Ansprüche 1 bis 10,
**dadurch gekennzeichnet, dass** die Zuführeinheit einen Überlauf für Brühwasser (77) aufweist und die Ventileinheit (6) ein Überlaufventil umfasst.

12. Brühvorrichtung nach Anspruch 11,
**dadurch gekennzeichnet, dass** das Überlaufventil weiter ein Funktionsteil der Zuführeinheit umfasst und das Überlaufventil von der Kanalplatte (40), der mindestens einen Membran (41) und dem Funktionsteil ausgebildet ist, wobei die Membran (41) ein Loch (75) aufweist, das durch die Kanalplatte (40) oder das Funktonsteil verschließbar ist. ,

13. Brühvorrichtung nach einem der Ansprüche 1 bis 12,
**dadurch gekennzeichnet, dass** die Kanalplatte (40) aus Kunststoff ausgebildet ist, bevorzugt als Spitzgießteil.

14. Brühvorrichtung nach einem der Ansprüche 1 bis 13,
**dadurch gekennzeichnet, dass** die Kanalplatte (40) Bohrungen (72) und/oder Ausnehmungen (71) zum Positionieren der Kanalplatte (40) in der Zuführeinheit aufweist.

15. Brühvorrichtung nach einem der Ansprüche 1 bis 14,
**dadurch gekennzeichnet,** die Kanalplatte (40) an mindestens einer Stirnseite vorstehende Bolzenabschnitte (73) zum Fixieren der mindestens einen Membran (41) aufweist.

16. Brühvorrichtung nach einem der Ansprüche 10 bis 15,
**dadurch gekennzeichnet, dass** ein Betätigungsring (33) zum Öffnen der Brühkammer (18) und bevorzugt eine Handhabe (36) zum Betätigen des Betätigungsrings (33) vorgesehen ist, wobei der Betätigungsring (33) und/oder die Handhabe (36) ausgebildet sind den Stellmechanismus zu betätigen.

17. Brühvorrichtung nach einem der Ansprüche 1 bis 16,
**dadurch gekennzeichnet, dass** die Ventileinheit (6) eine zweite Membran (42) umfasst.

18. Brühvorrichtung nach Anspruch 17,
**dadurch gekennzeichnet, dass** die zweite Membran (42) als einteilige, flexible Platte, bevorzugt aus einem gummielastischen Material ausgebildet ist, die sich im Wesentlichen über eine zweite Stirnfläche der Kanalplatte (40) erstreckt.

19. Brühvorrichtung nach Anspruch 17 oder 18,
**dadurch gekennzeichnet, dass** die zweite Membran (42) Löcher aufweist, die einen Übertritt des Brühwassers von der einen Membranseite auf die andere Membranseite ermöglichen.

20. Brühvorrichtung nach einem der Ansprüche 7 bis 19,
**dadurch gekennzeichnet, dass** die Ventileinheit (6) ein Druckventil umfasst, wobei das Druckventil den Zulauf von unter Druck stehendem Brühwasser zu dem Äuslassventil und/oder dem Heißwasser-Auslaufventil ermöglicht.

21. Brühvorrichtung nach Anspruch 20,
**dadurch gekennzeichnet, dass** das Druckventil von der Kanalplatte (40) und der zweiten Membran (42) ausgebildet ist, wobei eine Durchlaufbohrung in der Kanalplatte (40) durch die Membran (42) verschließbar ausgestaltet ist.

22. Brühvorrichtung nach einem der Ansprüche 1 bis 21,
**dadurch gekennzeichnet, dass** die Brühkammer (18) einen oberen Brühkammerteil (2), einen unteren Brühkammerteil und mindestens ein in einer Vertiefung des unteren Brühkammerteils angeordnetes und mit gemahlenem Kaffee gefülltes Filterkissen aufweist, wobei der obere Brühkammerteil (2) und der untere Brühkammerteil relativ zueinander bewegbar ausgeführt und von einer Öffnungsstellung, in der das Kaffeepad einsetz- oder entnehmbar ist, in eine Brühstellung überführbar sind, und die Zuführeinheit im oberen Brühkammerteil (2) angeordnet ist.

## Claims

1. Brewing device for preparing coffee, in particular for a low-pressure coffee machine, with a brewing chamber (18) and an intake unit for brewing water having an inlet (9) and an outlet for brewing water, as well as a valve unit (6) comprising at least one membrane (41) and a ducting plate (40), which ducting plate (40) has at least one valve orifice on the side of the ducting plate facing the membrane (41), at least one passage portion communicating with the at least one valve orifice for guiding the brewing water radially in the ducting plate (40), and at least one continuous bore communicating with the at least one passage portion, which opens on the oppositely lying side of the ducting plate (40),
**characterised in that** the at least one membrane (41) has at least one orifice affording a passage for the brewing water from one membrane side to the other membrane side.

2. Brewing device as claimed in claim 1,
**characterised in that** the at least one membrane (41) is provided in the form of a one-piece, flexible plate, preferably made from a rubber elastic material, which extends essentially across an end face of the ducting plate (40).

3. Brewing device as claimed in claim 1 or 2,
**characterised in that** the intake unit has a hot water discharge (10) and the valve unit (6) comprises a hot water discharge valve.

4. Brewing device as claimed in claim 3,
**characterised in that** the hot water discharge (10) has an orifice plate (55).

5. Brewing device as claimed in claim 3 or 4,
**characterised in that** the discharge valve is formed by the ducting plate (40) and the at least one membrane (41), and a discharge bore (48) in the ducting plate (40) is designed so that it can be closed by the membrane (41).

6. Brewing device as claimed in one of claims 1 to 5,
**characterised in that** the valve unit (6) comprises an outlet valve.

7. Brewing device as claimed in claim 6,
**characterised in that** the outlet valve is formed by the ducting plate (40) and the at least one membrane (41) and an outlet bore (46) in the ducting plate (40) is designed so that it can be closed by the membrane (41).

8. Brewing device as claimed in one of claims 3 to 7,
**characterised in that** an actuator mechanism is provided, which actuator mechanism is designed to switch the valve unit (6) between the outlet for brewing water and the hot water discharge (10).

9. Brewing device as claimed in claim 8,
**characterised in that** the actuator mechanism comprises two valve bodies, preferably two valve balls (17, 22), and the valve bodies are able to close the outlet bore (46) and the hot water discharge bore (48) by means of the membrane (41).

10. Brewing device as claimed in claim 9,
**characterised in that** the actuator mechanism also has a rotatable switching shaft (8) with a cam profile comprising different axially offset switch surfaces (61, 62), which switch surfaces (61, 62) are defined by the actuate and release positions assigned to the two valve bodies, and the switching shaft (8) pushes the valve bodies onto the membrane (41) or releases them from it in the associated actuate and release positions by means of axially offset switch surfaces (61, 62), and the membrane (41) closes or releases the outlet and hot water discharge bores (46, 48).

11. Brewing device as claimed in one of claims 1 to 10,
**characterised in that** the intake unit has an overflow (77) for brewing water and the valve unit (6) comprises an overflow valve.

12. Brewing device as claimed in claim 11,
**characterised in that** the overflow valve also comprises a functional part of the intake unit and the overflow valve is formed by the ducting plate (40), the at least one membrane (41) and the functional part, and the membrane (41) has an orifice (75) which can be closed by means of the ducting plate (40) or the functional part.

13. Brewing device as claimed in one of claims 1 to 12,
**characterised in that** the ducting plate (40) is made from plastic, preferably as an injection-moulded part.

14. Brewing device as claimed in one of claims 1 to 13,
**characterised in that** the ducting plate (40) has bores (72) and/or cut-outs (71) for positioning the ducting plate (40) in the intake unit.

15. Brewing device as claimed in one of claims 1 to 14,
**characterised in that** the ducting plate (40) has bolt portions (73) projecting from at least one end face for securing the at least one membrane (41).

16. Brewing device as claimed in one of claims 10 to 15,
**characterised in that** an operating ring (33) for opening the brewing chamber (18) is provided and preferably a handle (36) for operating the operating ring (33), and the operating ring (33) and/or the handle (36) are designed to operate the actuator mechanism.

17. Brewing device as claimed in one of claims 1 to 16,
**characterised in that** the valve unit (6) has a second membrane (42).

18. Brewing device as claimed in claim 17,
**characterised in that** the second membrane (42) is provided in the form of a one-piece, flexible plate preferably made from a rubber elastic material, which extends essentially across a second end face of the ducting plate (40).

19. Brewing device as claimed in claim 17 or 18,
**characterised in that** the second membrane (42) has orifices which afford a passage for the brewing water from one membrane side to the other membrane side.

20. Brewing device as claimed in one of claims 7 to 19,
**characterised in that** the valve unit (6) comprises a pressure valve and the pressure valve enables pressurised brewing water to be delivered to the outlet valve and/or the hot water discharge valve.

21. Brewing device as claimed in claim 20,
**characterised in that** the pressure valve is formed by the ducting plate (40) and the second membrane (42), and a continuous bore in the ducting plate (40) is designed so that it can be closed by the membrane (42).

22. Brewing device as claimed in one of claims 1 to 21,
**characterised in that** the brewing chamber (18) has a top brewing chamber part (2), a bottom brewing chamber part and at least one filter pad filled with ground coffee disposed in a well of the bottom brewing chamber part, and the top brewing chamber part (2) and the bottom brewing chamber part are mounted so that they can be moved relative to one another and switched from an open position in which the coffee pad can be inserted or removed into a brewing position, and the intake unit is disposed in the top brewing chamber part (2).

## Revendications

1. Dispositif d'infusion pour préparer du café, en particulier pour une machine à café basse pression, comprenant une chambre d'infusion (18) et une unité d'amenée pour l'eau d'infusion qui comporte une amenée (9) et une sortie pour l'eau d'infusion ainsi qu'une unité de soupape (6) pourvue d'au moins une membrane (41) et d'une plaque à conduits (40), la plaque à conduits (40) présentant au moins une ouverture de soupape sur sa face reliée à la membrane (41), au moins une partie de conduit qui est reliée à ladite ouverture de soupape et qui est destinée à guider l'eau d'infusion dans la plaque à conduits (40), et au moins un perçage de passage qui est relié à ladite partie de conduit et qui débouche sur la face opposée de la plaque (40),
**caractérisé en ce que** la ou les membranes (41) présentent au moins un trou qui permet à l'eau d'infusion de passer d'une face de la membrane à l'autre.

2. Dispositif d'infusion selon la revendication 1, **caractérisé en ce que** la ou les membranes (41) sont conçues comme des plaques flexibles d'une seule pièce, de préférence en caoutchouc, qui s'étendent globalement sur une surface frontale de la plaque à conduits (40).

3. Dispositif d'infusion selon la revendication 1 ou 2, **caractérisé en ce que** l'unité d'amenée présente une sortie d'eau chaude (10) et l'unité de soupape (6) comprend une soupape d'écoulement d'eau chaude.

4. Dispositif d'infusion selon la revendication 3, **caractérisé en ce que** la sortie d'eau chaude (10) présente un orifice d'étranglement (55).

5. Dispositif d'infusion selon la revendication 3 ou 4, **caractérisé en ce que** la soupape d'écoulement est formée par la plaque à conduits (40) et la ou les membranes (41), un perçage d'écoulement (48) étant formé dans ladite plaque (40) de manière à pouvoir être obturé par la membrane (41).

6. Dispositif d'infusion selon l'une des revendications 1 à 5, **caractérisé en ce que** l'unité de soupape (6) comprend une soupape d'écoulement.

7. Dispositif d'infusion selon la revendication 6, **caractérisé en ce que** la soupape de sortie est formée par la plaque à conduits (40) et la ou les membranes (41), un perçage de sortie (46) étant formé dans ladite plaque (40) de manière à pouvoir être obturé par la membrane (41).

8. Dispositif d'infusion selon l'une des revendications 3 à 7, **caractérisé en ce qu'**il est prévu un mécanisme de positionnement, ce mécanisme de positionnement étant conçu pour faire passer l'unité de soupape (6) de la sortie prévue pour l'eau d'infusion à la sortie d'eau chaude (10) et inversement.

9. Dispositif d'infusion selon la revendication 8, **caractérisé en ce que** le mécanisme de positionnement comprend deux corps de soupape, de préférence deux billes de soupape (17, 22), et ces corps de soupape sont aptes à obturer le perçage de sortie (46) et le perçage d'écoulement d'eau chaude (48) à l'aide de la membrane (41).

10. Dispositif d'infusion selon la revendication 9, **caractérisé en ce que** le mécanisme de positionnement comprend par ailleurs un axe de commande rotatif (8) avec un contour à cames qui présente différentes surfaces de commande (61, 62) décalées axialement, les surfaces de commande (61, 62) étant définies par les positions de positionnement et de détente associées aux deux corps de soupape, et l'axe de commande (8), dans les positions de positionnement et de détente associées, poussant les corps de soupape sur la membrane (41) ou les déchargeant à l'aide desdites surfaces de commande (61, 62) décalées axialement, et la membrane (41) obturant ou dégageant les perçages de sortie et d'écoulement d'eau chaude (46, 48).

11. Dispositif d'infusion selon l'une des revendications 1 à 10, **caractérisé en ce que** l'unité d'amenée comporte un trop-plein pour l'eau d'infusion (77) et l'unité de soupape (6) comprend une soupape de trop-plein.

12. Dispositif d'infusion selon la revendication 11, **caractérisé en ce que** la soupape de trop-plein comprend par ailleurs un élément fonctionnel de l'unité d'amenée, et la soupape de trop-plein est formée par la plaque à conduits (40), la ou les membranes (41) et l'élément fonctionnel, la membrane (41) présentant un trou (75) qui est apte à être obturé par la plaque à conduits (40) ou l'élément fonctionnel.

13. Dispositif d'infusion selon l'une des revendications 1 à 12, **caractérisé en ce que** la plaque à conduits (40) est en matière plastique et est de préférence conçue comme une pièce moulée par injection.

14. Dispositif d'infusion selon l'une des revendications 1 à 13, **caractérisé en ce que** la plaque à conduits (40) présente des perçages (72) et/ou des creux (71) pour son positionnement dans l'unité d'amenée.

15. Dispositif d'infusion selon l'une des revendications 1 à 14, **caractérisé en ce que** la plaque à conduits (40) présente sur au moins une face frontale des parties de tiges saillantes (73) pour la fixation de ladite membrane (41).

16. Dispositif d'infusion selon l'une des revendications 10 à 15, **caractérisé en ce qu'**il est prévu une bague d'actionnement (33) pour l'ouverture de la chambre d'infusion (18), et de préférence une poignée (36) pour l'actionnement de ladite bague (33), la bague d'actionnement (33) et/ou la poignée (36) étant conçues pour actionner le mécanisme de positionnement.

17. Dispositif d'infusion selon l'une des revendications 1 à 16, **caractérisé en ce que** l'unité de soupape (6) comprend une seconde membrane (42).

18. Dispositif d'infusion selon la revendication 17, **caractérisé en ce que** la seconde membrane (42) est conçue comme une plaque flexible d'une seule pièce, de préférence en caoutchouc, qui s'étend globalement sur une seconde surface frontale de la plaque à conduits (40).

19. Dispositif d'infusion selon la revendication 17 ou 18, **caractérisé en ce que** la seconde membrane (42) présente des trous qui permettent à l'eau d'infusion de passer d'une face de la membrane à l'autre.

20. Dispositif d'infusion selon l'une des revendications 7 à 19, **caractérisé en ce que** l'unité de soupape (6) comprend une soupape de pression, la soupape de pression permettant l'amenée d'eau d'infusion sous pression dans la soupape de sortie et/ou dans la soupape d'écoulement d'eau chaude.

21. Dispositif d'infusion selon la revendication 20, **caractérisé en ce que** la soupape de pression est formée par la plaque à conduits (40) et la seconde membrane (42), un perçage de passage étant formé dans la plaque à conduits (40) de manière à pouvoir être obturé par la membrane (42).

22. Dispositif d'infusion selon l'une des revendications 1 à 21, **caractérisé en ce que** la chambre d'infusion (18) comporte une partie supérieure (2), une partie inférieure et au moins un sachet-filtre qui est disposé dans une cavité de la partie de chambre d'infusion inférieure et qui est rempli de café moulu, les parties de chambre d'infusion supérieure (2) et inférieure étant mobiles l'une par rapport à l'autre et étant aptes à passer d'une position d'ouverture dans laquelle la dosette de café peut être mise en place ou enlevée à une position d'infusion, et l'unité d'amenée étant disposée dans la partie de chambre supérieure (2).
